# EUROPÄISCHE PATENTANMELDUNG

(11) **EP 0 808 560 A1**
(43) Veröffentlichungstag der Anmeldung: **26.11.1997**
(21) Anmeldenummer: 97201418.7
(22) Anmeldetag: 14.05.1997
(51) Int. Cl.: A01F 25/00, A01F 25/20, A01K 5/00, A01D 90/12

(54) **Vorrichtung zur Ausgabe von Viehfutter**

(30) Priorität: 22.05.1996 NL 1003179
(71) Anmelder: Postevendam B.V., 7481 BR Haaksbergen (NL)
(72) Erfinder: Liet, Cornelis Hendricus, 7581 PJ Losser (NL); Liet, Fredericus, 2382 Poppel (BE)
(74) Vertreter: de Vries, Johannes Hendrik Fokke

(57) **Zusammenfassung**

Eine Vorrichtung zur Ausgabe von Viehfutter aus einem Vorrat ist mit einem transportabelen Ladebehälter mit einer Mischkammer und einem in der Mischkammer angeordneten, in Form von zwei endlosen, durch Mitnehmer miteinander verbundenen Organe, wie Ketten oder dergleichen, ausgestatteten Mischorgan, versehen. Der Ladebehälter ist an seiner Vorderseite an einen Schlepper ankuppelbar ist. Weiterhin ist die Vorrichtung mit einem Schwenkarm, der an seinem einen Ende an dem Ladebehälter schwenkbar gelagert ist und der an seinem anderen Ende ein Ausgabeglied trägt, versehen. Die endlosen Organe durchlaufen eine erste Bahnstrecke, welche die Mischkammer teilweise umringt und eine offene Zufuhrseite freilässt, sowie eine zweite Bahnstrecke ausserhalb der Mischkammer. Die Bahnstrecken sind wenigstens über oberen Umlaufglieder miteinander verbunden, wobei die erste Bahnstrecke mit einem Bodenteil, einem aufwärts laufenden, an der Abfuhrseite der Mischkammer grenzenden Teil und einem die Höhendifferenz zwischen dem aufwärts laufenden Teil und den oberen Umlaufgliedern überbrückenden Oberteil versehen ist.

## Beschreibung

Die Erfindung betrifft eine Vorrichtung zur Ausgabe von Viehfutter aus einem Vorrat, mit einem transportabelen Ladebehälter mit einer Mischkammer und einem in der Mischkammer angeordneten, in Form von zwei endlosen, durch Mitnehmer miteinander verbundenen Organen, wie Ketten oder dergleichen, ausgestatteten Mischorgan, wobei der Ladebehälter an seiner Vorderseite an einen Schlepper ankuppelbar ist, und mit einem Schwenkarm, der mit seinem einen Ende an dem Ladebehälter schwenkbar angelenkt ist und der an seinem anderen, freien Ende ein Ausgabeglied trägt.

Vorrichtungen dieser Art sind in verschiedene Ausführungsformen bekannt. Bei den bekannten Vorrichtungen werden im wesentlichen zwei Typen von Mischorganen verwendet, d.h. eine Mischschnecke oder mit Mitnehmern versehene Mischketten. Die mit Mischschnecken als Mischorgan versehenen Vorrichtungen haben im allgemeinen eine Mischkammer mit einem grösseren Inhalt als die mit Mischketten als Mischorgan versehenen Vorrichtungen. Die Vorrichtungen mit Mischschnecken sind jedoch auch relativ schwer und erfordern eine höhe Antriebsleistung, wodurch diese bekannten Vorrichtungen relativ teuer sind. Die Vorrichtungen mit Mischketten als Mischorgan haben das Vorteil, dass die Konstruktion einfacher ist und weniger Antriebsleistung erfordert wird. Dadurch sind die Anschaffungskosten und die Betriebskosten dieser Vorrichtungen niedriger.

Durch die zunehmende Vergrösserung der Viehhöfe entsteht eine Nachfrage nach einer relativ billigen Vorrichtung dieser Art mit einem grösseren Inhalt der Mischkammer. Eine Vergrösserung des Rauminhaltes der Mischkammer kan nur durch eine Verlängerung der Mischkammer erreicht werden, da eine Verbreiterung und/oder Erhöhung wegen der vorgegebenen Abmessungen der Stalltüren und Futtergang nicht möglich ist. Bei den bekannten Vorrichtungen ist der Schwenkarm an der Vorderseite schwenkbar an dem Ladebehälter angelenkt, wodurch eine Verlängerung der Mischkammer und damit des Ladebehälters auch eine Verlängerung des Schwenkarmes erfordert. Ein längerer Schwenkarm verursacht jedoch eine schwerere Konstruktion und damit eine Verstärkung des Antriebsorganes. Dies bedeutet nicht nur eine Erhöhung des Konstruktionsaufwandes der Vorrichtung sondern auch, dass ein grösserer Teil der gesammten Höhe der Vorrichtung durch den Schwenkarm eingenommen wird. Weiterhin wird die Sicht des sich normalerweise in dem Schlepper sitzenden Fahrers mehr behindert.

Bei dem bekannten, mit Mischketten oder dergleichen Organen ausgestatteten Vorrichtungen formen die Mischketten und die dazwischen angeordneten Mitnehmer meistens eine Behinderung zum Einbringen von Viehfutter in die Mischkammer. Weiterhin kan bei der bekannten Vorrichtung das Problem eintreten, dass das Viehfutter an den Mischketten und/oder Mitnehmern hängen bleibt, wodurch das Mischorgan festlaufen kann.

Die Erfindung beabsichtigt eine Vorrichtung der gattungsgemässen Art zu schaffen, bei der die obenerwähnten Nachteile der bekannten Vorrichtungen auf einfacher Weise vermieden werden.

Dazu ist die erfindungsgemässe Vorrichtung dadurch gekennzeichnet, dass die endlosen Organe eine erste Bahnstrecke, welche die Mischkammer teilweise umringt und eine offene Zufuhrseite freilässt, sowie eine zweite Bahnstrecke ausserhalb der Mischkammer, durchlaufen, welche Bahnstrecken wenigstens über oberen Umlaufglieder miteinander verbunden sind, wobei die erste Bahnstrecke mit einem Bodenteil, einem aufwärts laufenden, an der Abfuhrseite der Mischkammer grenzenden Teil und einem die Höhendifferenz zwischen dem aufwärts laufenden Teil und den oberen Umlaufgliedern überbrückenden Oberteil versehen ist.

Auf diese Weise wird eine Vorrichtung geschaffen, bei der das Viehfutter leicht in die Mischkammer gebracht werden kann und sich das Viehfutter von den endlosen Organen und Mitnehmern löst, bevor die endlosen Organen das oberen Umlaufglied erreichen.

Im Folgenden wird die Erfindung anhand der Zeichnung, in der eine Ausführungsform der erfindungsgemässen Vorrichtung schematisch dargestellt ist, näher erläutert.

Fig. 1 zeigt einen schematisch dargestellten Längsschnitt einer ersten Ausführungsform der erfindungsgemässen Vorrichtung.

Fig. 2 ist eine teilweise dargestellten Querschnitt gemäss II-II.

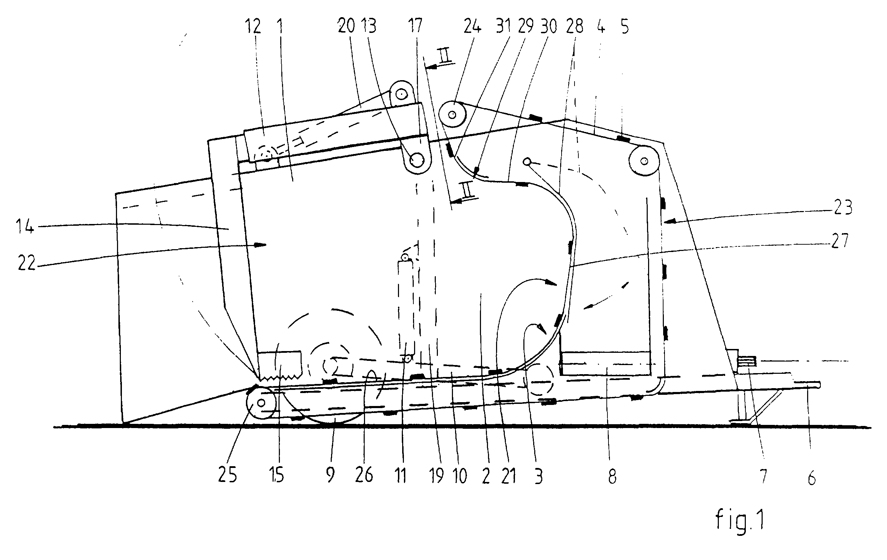

In Fig. 1 ist eine Vorrichtung zur Ausgabe von Viehfutter aus einem Vorrat dargestellt, die mit einem transportabelen Ladebehälter 1 mit einer Mischkammer 2 und einem in der Mischkammer angeordneten Mischorgan 3 versehen ist. Dieses Mischorgan 3 ist bei dieser Ausführungsform in Form von zwei endlosen, mit Mitnehmern 5 ausgestatteten und mit einander verbundenen Ketten 4, von denen in der Zeichnung nur eine sichtbar ist, ausgebildet. An der Vorderseite ist der Ladebehälter 1 mittels eines Zugbalkens 6 an einen nicht-dargestellten Schlepper kuppelbar, wobei an der Vorderseite auch eine Antriebswelle 7 angeordnet ist, die mit der Zapfwelle eines Schleppers zum Antrieb des Mischorganes 3 und eines Querförderers 8 verbindbar ist. Der Querförderer 8 kann in üblicher Weise das Viehfutter an der linken oder rechten Seite der Vorrichtung abführen. Der Ladebehälter 1 ist in diesem Fall fahrbar und ist dazu beidseitig mit einem über einem Arm 10 auf- und abwärts bewegbaren mit dem Ladebehälter 1 verbundenen Rad 9 versehen, wobei der Antrieb über eine Zylinder-Kolbeneinheit 11 erfolgt.

Die beschriebene Vorrichtung ist weiterhin mit einem bei 13 schwenkbar an dem Ladebehälter 1 angelenkten und an dem Ladebehälters 1 abgestützten Schwenkarm 12 versehen. Der Schwenkarm 12 ist bei der dargestellten Ausführungsform als Teleskoparm ausgebildet und trägt an seinem freien Ende ein an der Unterseite mit nicht weiter dargestellten Schneidorganen und zwei Seitenschneidorganen 15 versehenes Schneidschild 14. Das Schneidschild 14 ist fest mit dem freien Ende des Schwenkarmes 12 verbunden, wobei das Schneidschild 14 in der gezeichneten eingezogenen Stellung des teleskopischen Schwenkarmes die Mischkammer 2 an der Rückseite abschliesst.

Es wird darauf hingewiesen, dass der Schwenkarm 12 auch als fester Schwenkarm ausgebildet und das Schneidschild schwenkbar mit dem freien Ende des Schwenkarmes verbunden sein könnte. Ferner ist es möglich anstatt eines Schneidschildes eine sogenannte Ausgabeklaue oder ein Fräseglied als Ausgabeglied zu verwenden. Das dargestellte Schneidschild 14 mit einem oder zwei Seitenschneidorganen 15 wird jedoch bevorzugt da damit mit höherer Geschwindigkeit Viehfutter aus einem Vorrat geschnitten werden kann.

Wie Fig. 1 zeigt, liegt das Schwenklager 13 des Schwenkarmes 12 in einem Abstand von der Vorderseite des Ladebehälters 1, so dass ein Teil der Mischkammer 2 zwischen dem Schwenklager 13 und der Vorderseite des Ladebehälters 1 liegt. Vorzugsweise ist das Schwenklager 13 des Schwenkarmes 12 in einem Abstand von der Vorderseite des Ladebehälters 1 angeordnet, der wenigstens gleich ein Viertel der Länge der Mischkammer 2 ausmacht. Dadurch ist es möglich auch bei einer grössen Länge der Mischkammer 2 einen relativ kurzen Schwenkarm 12 mit leichter Konstruktion zu verwenden, so dass der Schwenkarm 12 die Sichtverhältnisse des Fahrers nach hinten zur Rückseite der Vorrichtung nahezu nicht behindert. Darüberhinaus baut der Schwenkarm 12 durch die relativ leichte Konstruktion klein, so dass nur ein geringer Teil der Höhe der Vorrichtung durch die Konstruktion des Schwenkarmes 12 eingenommen wird und eine maximale Höhe für die Mischkammer 2 zur Verfügung steht. Weiterhin kann sich der Teil der Mischkammer zwischen dem Schwenklager 13 und der Vorderseite des Ladebehälters 1 über eine grössere Höhe und zwar erstrecken bis auf oder über die Höhe des Schwenklagers 13 erstrecken.

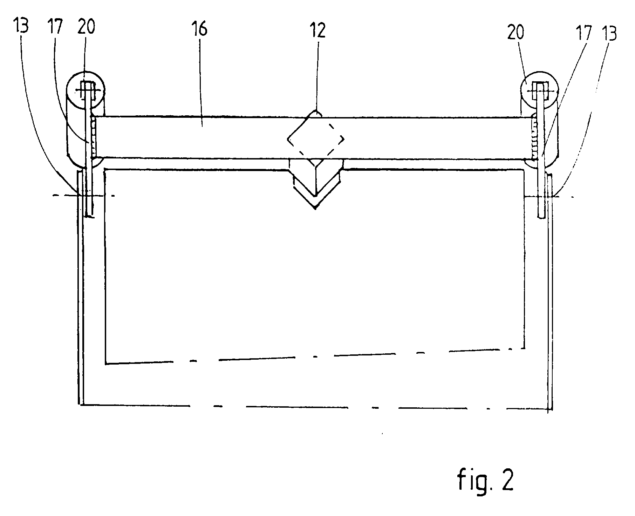

Der Schwenkarm 12 ist bei der in Fig. 2 dargestellten Ausführungsform an dem gegenüber dem Schneidschild 14 liegenden Ende fest mit einem an jedem Ende mit einem Stützarm 17 (siehe Fig. 2) verbundenen Querbalken 16 verbunden. Diese Stützarme 17 sind jeweils in einem Abstand unterhalb des Querbalkens 16 bei 13 schwenkbar an einer Seitenwand 18 des Ladebehälters 1 abgestützt. Falls erforderlich kann an der Stelle des Schwenklagers 13 eine Verstärkung der Seitenwand 18 vorgesehen sein, wie sie schematisch mit 19 angegeben ist. Dadurch wird erreicht, dass der Querbalken 16 und der Schwenkarm 12 möglichst hoch oberhalb der Mischkammer 2 zu liegen kommen, so dass das Viehfutter unter den Querbalken 16 hindurch passieren kann.

Wie Fig. 1 und 2 zeigen, sind die Stützarme 17 bis oberhalb des Querbalkens 16 verlängert und oberhalb des Querbalkens 16 jeweils mit einem als Zylinder-Kolbeneinheit ausgebildeten Antriebsorgan 20 verbunden, das zum Schwenken des Schwenkarmes 12 dient.

Bei der in Fig. 1 dargestellten Vorrichtung durchlaufen die Ketten 4 eine erste Bahnstrecke 21, welche die Mischkammer 2 teilweise umringt und eine offene Zufuhrseite 22 freilässt. Hierdurch kann das durch das Schneidschild 14 ausgegebene Viehfutter leicht in die Mischkammer 2 gebracht werden. Weiterhin durchlaufen die Ketten 4 eine zweite ausserhalb der Mischkammer 2 liegende Bahnstrecke 23. Die Bahnstrecken 21 und 23 sind im Bereich eines oberen und eines unteren, jeweils in Form von Umlenkscheiben ausgebildeten Umlaufgliedern 24 bzw. 25 miteinander verbunden. Die erste Bahnstrecke 21 ist mit einem entlang dem Boden des Ladebehälters 1 verlaufenden Bodenteil 26 und einem aufwärts laufenden, an der Abfuhrseite der Mischkammer 2 grenzenden Teil 27 versehen. Die Abfuhrseite der Mischkammer 2 ist mittels einer Klappe 28 verschliessbar, wobei bei geöffneter Klappe 28 das durch das Mischorgan 3 gemischte Viehfutter dosiert an den Querförderer 8 abgegeben wird.

Weiterhin enthält die erste Bahnstrecke 21 ein die Höhendifferenz zwischen dem aufwärts laufenden Teil 27 und dem oberen Umlaufglied 24 überbrückenden Oberteil 29. Bei der dargestellten Ausführungsform enthält der Oberteil 29 einen nahezu horizontalen Teil 30, in dem die Ketten 4 in entgegengesetzter Richtung zu dem Bodenteil verlaufen. Auf dem nahezu horizontalen Teil 30 folgt ein schräg aufwärts in der Richtung von der Vorderseite zu der Rückseite des Ladebehälters 1 verlaufender Teil 31. Durch eine solche Ausführung des Oberteiles 29, der im ganzen oder mit einem Teil die erwähnte Höhendifferenz überbrückt, wobei sich die Ketten von der Vorderseite zu der Rückseite bewegen, wird erreicht, dass sich das Viehfutter in der Mischkammer 2 von den Ketten 4 und den Mitnehmern 5 löst, bevor die Ketten und Mitnehmer das obere Umlaufglied 24 erreichen. Hierdurch wird ein Festlaufen des Mischorganes 4 vermieden.

Fig. 1 zeigt, dass das obere Umlaufglied 24 zwischen dem Schwenklager 13 und der Vorderseite des Ladebehälters 1 in einer Höhe oberhalb der Höhe des Schwenklagers 13 liegt.

Die Erfindung ist nicht auf die in vorhergehende beschriebene Ausführungsform beschränkt, die im Rahmen der Ansprüche aud verschiedene Weisen abgeändert werden kann.

## Patentansprüche

1. Vorrichtung zur Ausgabe von Viehfutter aus einem Vorrat, mit einem transportabelen Ladebehälter mit einer Mischkammer und einem in der Mischkammer angeordneten, in Form von zwei endlosen, durch Mitnehmer miteinander verbundenen Organe, wie Ketten oder dergleichen, ausgestatteten Mischorgan, wobei der Ladebehälter an seiner Vorderseite an einen Schlepper ankuppelbar ist, und mit einem Schwenkarm, der an seinem einen Ende an dem Ladebehälter schwenkbar gelagert ist und der an seinem anderen Ende ein Ausgabeglied trägt, dadurch gekennzeichnet, dass die endlosen Organe eine erste Bahnstrecke, welche die Mischkammer teilweise umringt und eine offene Zufuhrseite freilässt, sowie eine zweite Bahnstrecke ausserhalb der Mischkammer, durchlaufen, welche Bahnstrecken wenigstens über oberen Umlaufglieder miteinander verbunden sind, wobei die erste Bahnstrecke mit einem Bodenteil, einem aufwärts laufenden, an der Abfuhrseite der Mischkammer grenzenden Teil und einem die Höhendifferenz zwischen dem aufwärts laufenden Teil und den oberen Umlaufgliedern überbrückenden Oberteil versehen ist.

2. Vorrichtung nach Anspruch 1, wobei der Oberteil wenigstens einen schräg aufwärts laufenden Teil enthält.

3. Vorrichtung nach Anspruch 2, wobei der schräg aufwärts laufende Teil von der Vorderseite zu der Rückseite des Ladebehälters verläuft.

4. Vorrichtung nach Anspruch 1, 2 oder 3, wobei die oberen Umlaufglieder zwischen dem schwenkbar angelenkten Ende des Schwenkarmes und der Vorderseite des Ladebehälters liegen und vorzugsweise oberhalb des Schwenklagers, derart dass wenigstens ein Teil der Mischkammer zwischen dem Schwenklager des Schwenkarmes und der Vorderseite des Ladebehälters liegt.

5. Vorrichtung nach einem der vorgehenden Ansprüche, wobei der Schwenkarm als Teleskoparm ausgebildet ist und vorzugsweise ein Schneidschild als Ausgabeglied trägt, das in seiner eingezogenen Stellung die Rückseite des Ladebehälters abschliesst.
